# EUROPEAN PATENT SPECIFICATION

(11) **EP 4 019 853 B1**
(45) Date of publication and mention of the grant of the patent: **30.04.2025**
(21) Application number: 20216452.1
(22) Date of filing: 22.12.2020
(51) Int. Cl.: F24D 10/00

(54) **THERMAL ENERGY BALANCING DEVICE**
VORRICHTUNG ZUM AUSGLEICHEN THERMISCHER ENERGIE
DISPOSITIF D'ÉQUILIBRAGE D'ÉNERGIE THERMIQUE

(43) Date of publication of application: 29.06.2022
(73) Proprietor: E.ON Sverige AB, 205 09 Malmö (SE)
(72) Inventor: Rosén, Per, 227 33 Lund (SE); Skogström, Jacob, 234 42 Lomma (SE); Carlström, Helen, 237 36 Bjärred (SE); Lindoff, Bengt, 237 35 Bjärred (SE)
(74) Representative: AWA Sweden AB

(56) References cited:
- EP-A1- 3 663 651
- EP-A1- 3 667 181
- WO-A1-2010/145040
- WO-A2-2008/102292
- CN-A- 106 568 116
- DE-A1- 102008 057 943

## Description

### Field of the invention

The invention relates to a thermal energy balancing device connected to a thermal energy circuit.

### Background of the invention

Nearly all large developed cities in the world have at least two types of energy grids incorporated in their infrastructures: one grid for providing electrical energy and one grid for providing space heating and hot tap water preparation. Today a common grid used for providing space heating and hot tap water preparation is a gas grid providing a burnable gas, typically a fossil fuel gas. The gas provided by the gas grid is locally burned for providing space heating and hot tap water. An alternative for the gas grid for providing space heating and hot tap water preparation is a district heating grid. Also, the electrical energy of the electrical energy grid may be used for space heating and hot tap water preparation. Also, the electrical energy of the electrical energy grid may be used for space cooling. The electrical energy of the electrical energy grid is further used for driving refrigerators and freezers.

Accordingly, traditional building heating and cooling systems use primary high-grade energy sources such as electricity and fossil fuels or an energy source in the form of industrial waste heat to provide space heating and/or cooling, and to heat or cool water used in the building. Furthermore, it has been increasingly common to also install a district cooling grid in cities for space cooling. The process of heating or cooling the building spaces and water converts this high-grade energy into low grade waste heat with high entropy which leaves the building and is returned to the environment.

In this kind of existing systems, it is well known to use cooling towers to exhale heat from the system and let it diminish into the air, to thereby get rid of waste heat. This is especially used in regions having a hot climate during most of the twelve months. However, also these regions have, at least during a part of the year, a lower temperature where there may be a need for an active supply of heat into the system. Examples of such regions are those where the winter temperature rarely go below 10 degrees Celsius. There is however no real economical and climate smart solutions of how to make this without involving high grade energy sources.

Hence, there is a need for improvements in how to provide flexible heating and cooling to a city and especially a versatile system that may be based on existing systems of the type described above.

WO 2010/145040 A1 discloses a district energy sharing system (DESS) comprising a thermal energy circuit which circulates and stores thermal energy in water, at least one client building thermally coupled to the circuit and which removes some thermal energy from the circuit ("thermal sink") and/or deposits some thermal energy into the circuit ("thermal source"), and at least one thermal server plant that can be thermally coupled to external thermal sources and/or sinks (e.g. a geothermal ground source) and whose function is to maintain thermal balance within the DESS.

EP 3 663 651 A1 (by the same applicant as the present application) relates to a method for controlling setting of reversible heat pump assemblies of a district thermal energy distribution system in either a heating mode or a cooling mode.

### Summary of the invention

It is an object of the present invention to solve at least some of the problems mentioned above.

According to a first aspect, a thermal energy balancing device is provided. The thermal energy balancing device is connected to a thermal energy circuit comprising a hot conduit configured to allow a district heat transfer liquid of a first temperature to flow therethrough, and a cold conduit configured to allow district heat transfer liquid of a second temperature to flow therethrough, the second temperature being lower than the first temperature, the thermal energy balancing device comprising:
a warm well;
a cold well;
a heat exchanger comprising a primary side and a secondary side;
a primary side valve arrangement connecting the primary side of the heat exchanger to the cold conduit and to the hot conduit; and
a secondary side valve arrangement connecting the secondary side of the heat exchanger to the cold well and to the warm well; wherein
the thermal energy balancing device is configured to be selectively set in a heat exhale mode and in a heat inhale mode,
wherein when the thermal balancing device is set into the heat exhale mode, the primary side valve arrangement is configured to direct district heat transfer liquid to flow from the hot conduit via the primary side of the heat exchanger to the cold conduit, and the secondary side valve arrangement is configured to direct heat transfer geothermal liquid to flow from the cold well via the secondary side of the heat exchanger to the warm well;
and wherein when the thermal balancing device is set into the heat inhale mode, the primary side valve arrangement is configured to direct district heat transfer liquid to flow from the cold conduit via the primary side of the heat exchanger to the hot conduit, and the secondary side valve arrangement is configured to direct heat transfer geothermal liquid to flow from the warm well via the secondary side of the heat exchanger to the cold well.

Accordingly, by the invention, a thermal energy balancing device is provided which is configured to balance the temperature difference between the hot and cold conduits in a district heating or district cooling grid by taking advantage of heat transfer geothermal liquid provided by subterranean warm and cold wells. By a secondary valve arrangement, the flow of heat transfer geothermal liquid may be set in either direction between the two wells. The setting is depending on if the client using the district grid is requesting the district grid to act as a district cooling grid or a district heating grid, which may vary across the year and the local climate.

The thermal energy balancing device uses, as one part thereof, a hot conduit and a cold conduit forming part of a thermal energy circuit. The thermal energy circuit may be part of a district grid. The two conduits do both have a flow of a district heat transfer liquid therethrough, but with an inherent temperature difference. The thermal energy circuit may by way of example be a bidirectional grid, such as a grid known as ectogrid^{™} which connects buildings with different needs and which balances residual thermal energy flows between the buildings. The two conduits are each, via a primary valve arrangement, connected to the primary side of a heat exchanger. The secondary side of the heat exchanger is connected to a warm well and a cold well via secondary valve arrangement.

The warm well and the cold well are subterranean liquid fluid supplies. The subterranean liquid may in its easiest form be groundwater. It is however to be understood that also other liquids may be used within the scope of the invention.

The wells may be drilled bore holes, conduits submerged in the bedrock, or natural subterranean flows of groundwater in the bedrock or in the ground. No matter type, there is a temperature difference between the warm well and the cold well. The liquid in the warm well is warmer than the liquid in the cold well. The warm well and the cold well may be hydraulically connected. Alternatively, the warm well and the cold well may be without any hydraulic connection, in which case the two wells may be seen as discrete wells. Further, the warm well and the cold well may be geographically separated in the horizontal and/or vertical direction. Thus, they may be arranged on different depths and on different locations.

The thermal energy balancing device may be set, either into a heat exhale mode or into a heat inhale mode, depending on if there is a need to exhale or inhale heat from or to the primary side of the thermal energy circuit. An exhale mode is applicable when clients in the district grid, which as such is part of the primary side of the thermal energy circuit, are seeking for a supply of cold to their system, such as indoor cooling during the warmer months of the year. Correspondingly, an inhale mode is applicable when clients in the district grid are seeking for a supply of heat to their system, such as indoor heating during the warmer months of the year. By the present invention this may now be made by exchanging heat or cold between a district grid, which as such is a well-known and often an existing infrastructure, with a geothermal liquid supply of heat transfer geothermal liquid in the form of a warm well and a cold well. Within the scope of the invention, the geothermal liquid supply with its warm and cold wells is part of the secondary side of the thermal energy circuit. The temperature difference of the heat transfer geothermal liquid in the warm and cold wells is used to either inhale or exhale heat to the district grid depending on the client's needs.

At least one of the two liquid circuits circulating district heat transfer liquid and heat transfer geothermal liquid respectively, may be provided as a closed loop. Especially the supply of heat transfer geothermal liquid to the secondary side valve arrangement may be provided as an open loop without any hydraulic connection between the warm well and the cold well. Both liquid circuits may be provided as closed loops.

In the event of the thermal energy balancing device being set to a heat exhale mode, the district heat transfer liquid from the hot conduit is allowed to be transferred via the primary side of the heat changer to the cold conduit, during which transfer the temperature of the hotter district heat transfer liquid will be lowered before being fed to and intermixed with the district heat transfer liquid in the cold conduit. Heat will be exhaled from the district heat transfer liquid while passing across the interface between the primary side and the secondary side of the heat exchanger. During this passage, heat exhaled from the primary side of the heat exchanger will be inhaled by the flow of heat transfer geothermal liquid which is passing across the interface between the secondary side and the primary side of the heat exchanger. More precisely, in the heat exhale mode of the thermal energy balancing device, the secondary side valve arrangement is set to direct a flow of heat transfer geothermal liquid from the cold well across the secondary side of the heat exchanger to the warm well. The cold heat transfer geothermal liquid will inhale the heat exhaled from the primary side of the heat exchanger and the thus heated heat transfer geothermal liquid will be directed by the secondary side valve arrangement to the warm well.

Correspondingly, in the event of thermal energy balancing device being set to a heat inhale mode, the colder district heat transfer fluid from the cold conduit is allowed to be transferred via the primary side of the heat changer to the hot conduit during which transfer the temperature of the colder district heat transfer fluid will be increased before being fed to and intermixed with the district heat transfer fluid in the hot conduit. Heat will be inhaled to the district heat transfer liquid while passing across the interface between the primary side and the secondary side of the heat exchanger. During this passage, heat will be inhaled from the flow of heat transfer geothermal liquid which is passing across the interface between the secondary side and the primary side of the heat exchanger. More precisely, in the heat inhale mode of the thermal energy balancing device, the secondary side valve arrangement is set to direct a flow of heat transfer geothermal liquid from the warm well across the secondary side of the heat exchanger to the cold well. The hot heat transfer geothermal liquid will exhale the heat and the thus cooled heat transfer geothermal liquid will be directed by the secondary side valve arrangement to the cold well.

The heat exchanger is preferably of a liquid-to-liquid type heat exchanger.

The fluid flow between the hot and cold conduits on the primary system side is controlled by a primary side valve arrangement. The primary side valve arrangement may have a design with a plurality of valves which, depending on their mutual setting, allow the flow of district heat transfer liquid to and from the two conduits to be controlled. The valves may be of the on/off type. Correspondingly, flow of heat transfer geothermal liquid between the hot and cold wells on the secondary system side is controlled by a secondary valve arrangement. The secondary primary side valve arrangement may have a design with a plurality of valves which, depending on their mutual setting, allow control of the flow of heat transfer geothermal liquid to and from the warm and cold wells. The valves may be of the on/off type.

The primary and secondary valve arrangements may have the same overall design.

The hot and cold wells may be closed loop wells and may be hydraulically connected via a conduit. The term "*closed loop well*" is in the context of the application to be understood as a flow of liquid that is circulated in a closed circuit between the two wells having different temperatures. The connections between the warm and cold wells and the secondary side valve arrangement are geographically separated from each other and also, the warm and cold wells are hydraulically connected to each other via a physical conduit. Upon the thermal balancing device is set into the heat exhale mode the physical conduit is configured to conduct heat transfer geothermal liquid from the cold well to the warm well. Upon the thermal balancing device is set into the heat inhale mode the physical conduit is configured to conduct heat transfer geothermal liquid from the warm well to the cold well.

The warm and cold wells may be open loop wells and the warm and cold wells may be hydraulically connected. The term "*open loop well*" is in the context of the application to be understood as that the connections between the warm and cold wells and the secondary side valve arrangement are geographically separated from each other and also that the warm and cold wells are hydraulically connected to each other by means of a naturally occurring subterranean fluid flow provided by the bedrock or by the ground. By taking advantage of the natural subterranean fluid flows, a cheaper installation may be provided for since there is no need for any excavation/drilling to allow installation of a ducting providing such hydraulic communication.

The warm and cold wells may be open loop wells, and the wrm and cold wells may be without any hydraulic connection. In such embodiment, the connections between the warm and cold wells and the secondary side valve arrangement are geographically separated from each other. Also, the warm and cold wells are geographically separated by the bedrock with no hydraulic communication therebetween. Thus, the warm and cold wells may be seen as discrete wells where fluid is pumped from one of the two wells and released in the other of the two wells without any return flow. A cheaper installation may thereby be provided for since there is no need for any excavation/drilling to allow installation of a ducting providing such hydraulic communication.

The warm and cold wells may be horizontally and/or vertically separated. This is applicable, no matter if the two wells are arranged to be in a hydraulic communication with each other or if they form discrete wells.

The thermal energy balancing device may further comprise a pump. The pump may be arranged in a position between the secondary side valve arrangement and the heat exchanger. Thereby there is no need for any submerged pumps. This facilitates installation and maintenance.

The primary side of the heat exchanger may comprise an inlet and an outlet, and the primary side valve arrangement may be configured to direct a flow of district heat transfer liquid from the inlet to the outlet when the primary side valve arrangement is set into the heat exhale mode and when the primary side valve arrangement is set into the heat inhale mode.

Accordingly, one and the same inlet on the primary side of the heat exchanger is used, no matter if the thermal energy balancing device is set to operate in an exhale mode or an inhale mode. Only the conduits in the thermal energy circuit from which the liquid is fed from and returned to are altered, and this is made by controlling the valves of the primary side valve arrangement.

The secondary side of the heat exchanger may comprise an inlet and an outlet, and the secondary side valve arrangement may be configured to direct a flow of heat transfer geothermal liquid from the inlet to the outlet when the secondary side valve arrangement is set into the heat exhale mode and when the secondary side valve arrangement is set into the heat inhale mode.

Accordingly, one and the same inlet on the secondary side of the heat exchanger is used, no matter if the thermal energy balancing device is set to operate in an exhale mode or an inhale mode. Only the wells from which the heat transfer geothermal liquid is fed from and returned to are altered, and this is made by controlling the valves of the secondary side valve arrangement.

The thermal energy balancing device may further comprise a regulator and a pressure difference determining device adapted to determine a local pressure difference, Δp_{local}, between a local hot conduit pressure, pₕ, of district heat transfer liquid of the hot conduit and a local cold conduit pressure, p_{c}, of district heat transfer liquid of the cold conduit (140), Δp_{local}=pₕ-p_{c}; and wherein the regulator is configured to, based on the determined local pressure difference, regulate the flow of district heat transfer liquid between the hot and cold conduits.

The pressure difference determining device is configured to sense local pressure in the hot conduit and in the cold conduit respectively and determine a difference between the two pressures. The pressure difference determining device may also be configured to determine if the determined local pressure difference is acceptable in view of a predetermined set value.

The local pressure in the two conduits will vary depending on where in the thermal energy circuit the pressure is measured. The local pressure differences are the result of different client's activity and needs. Examples of different clients are different households, different offices or different stores, which all have different needs which also vary over time and across a day.

The regulator may be provided as a pump which is arranged in a position between the hot conduit and the cold conduit. The regulator may be arranged either in a position before the inlet to the primary side of the heat exchanger, or after the outlet from the primary side of the heat exchanger. The purpose of the regulator is to promote the flow of liquid to the heat exchanger in the event the determined local pressure difference between the hot conduit and the cold conduit should be determined to be below a set value. In the event the determined local pressure difference instead should be determined to be above the set value, the regulator may instead be set into a passive mode and instead act as an open valve allowing a flow of district heat transfer liquid to pass therethrough.

The thermal energy balancing device may further comprise a controller connected to one or more of the pressure difference determining device, the regulator, the primary side valve arrangement and the secondary side valve arrangement.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as the realization of the device may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 is a schematic diagram of a district thermal energy distribution system.
Fig. 2 is a schematic diagram of a thermal energy balancing device of a closed loop type according to the invention.
Fig. 3 is a schematic diagram of a thermal energy balancing device of a closed loop type according to one embodiment of the invention set to inhale mode.
Fig. 4 is a schematic diagram of a thermal energy balancing device of a closed loop type according to one embodiment of the invention set to exhale mode.
Fig. 5 is a schematic diagram of a thermal energy balancing device of a closed loop type according to a second embodiment of the invention set to inhale mode.
Fig. 6 is a schematic diagram of a thermal energy balancing device of a closed loop type according to a third embodiment of the invention set to exhale mode.
Fig. 7 is a schematic diagram of a thermal energy balancing device of a closed loop type according to a third embodiment of the invention set to inhale mode.
Fig. 8 is a schematic diagram of a thermal energy balancing device of an open loop type according to a fourth embodiment of the invention set to exhale mode.
Fig. 9 is a schematic diagram of a thermal energy balancing device of an open loop type according to the fourth embodiment of the invention set to inhale mode.
Fig. 10 is a schematic diagram of a thermal energy balancing device of an open loop type according to the fourth embodiment of the invention set to exhale mode.
Fig. 11 is a schematic diagram of a thermal energy balancing device according to the invention disclosing a first embodiment of a pressure determining device.
Fig. 12 is a schematic diagram of a thermal energy balancing device according to the invention disclosing a second embodiment of a pressure determining device.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

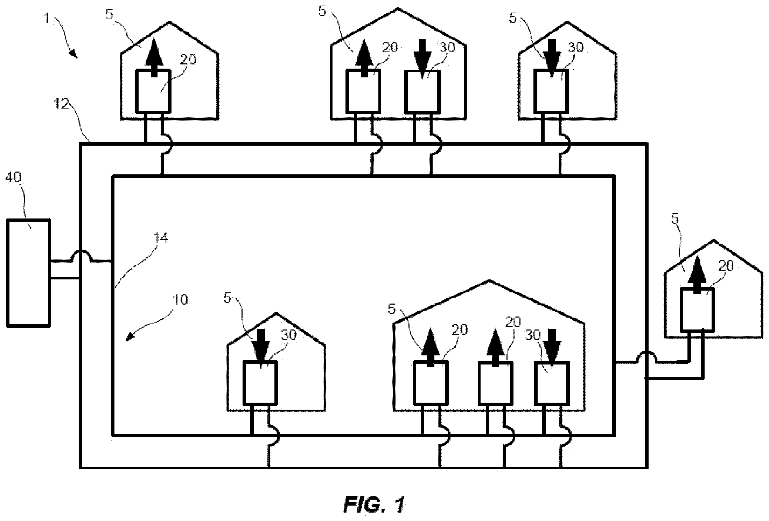

To facilitate the understanding of the invention, reference is made to Fig. 1 which discloses one example of a district thermal energy distribution system 1 according to prior art in which the invention may be applicable.

The district thermal energy distribution system 1 comprises a thermal energy circuit 10 and a plurality of buildings 5. The plurality of buildings 5 are thermally coupled to the thermal energy circuit 10. The thermal energy circuit 10 is arranged to circulate and store thermal energy in heat transfer liquid flowing through the thermal energy circuit 10.

According to one embodiment the heat transfer liquid comprises water. However, according to other embodiments other heat transfer liquid may be used. Some non-limiting examples are ammonia, oils, alcohols and anti-freezing liquids such as glycol. The heat transfer liquid may also comprise a mixture of two or more of the heat transfer liquids mentioned above.

The thermal energy circuit 10 comprises two conduits 12, 14 for allowing flow of heat transfer liquid therethrough. The temperature of the heat transfer liquid of the two conduits 12, 14 is set to be different. A hot conduit 12 in the thermal energy circuit 10 is configured to allow heat transfer liquid of a first temperature to flow therethrough. A cold conduit 14 in the thermal energy circuit 10 is configured to allow heat transfer liquid of a second temperature to flow therethrough. The second temperature is lower than the first temperature.

In case heat transfer liquid is water, a suitable normal operation hot temperature range for heat transfer liquid in the hot conduit 12 is between 5 and 45°C and a suitable normal operation cold temperature range for heat transfer liquid in the cold conduit 14 is between 0 and 40° C. A suitable temperature difference between the first and second temperatures is in the range of 5-16^{°}C, preferably in the range of 7-12°C, more preferably 8-10°C.

Preferably, the system is set to operate with a sliding temperature difference which varies depending on the climate. Preferably, the sliding temperature difference is fixed. Hence, the temperature difference is always set to momentarily slide with a fixed temperature difference.

The hot conduit 12 and the cool conduit 14 are separate. The hot conduit 12 and the cool conduit 14 may be arranged in parallel. The hot conduit 12 and the cool conduit 14 may be arranged as closed loops of piping. The hot conduit 12 and the cool conduit 14 are fluidly interconnected at the buildings 5 for allowing of thermal energy transfer to and from the buildings 5.

According to one embodiment the two conduits 12, 14 of the thermal energy circuit 10 are dimensioned for pressures up to 1 MPa (10 bar). According to other embodiments the two conduits 12, 14 of the thermal energy circuit 10 may be dimensioned for pressures up to 0.6 MPa (6 bar) or for pressures up to 1.6 MPa (16 bar).

Each building 5 comprise at least one of one or more local thermal energy consumer assemblies 20 and one or more local thermal energy generator assemblies 30. Hence, each building comprises at least one local thermal energy consumer assembly 20 or at least one local thermal energy generator assembly 30. One specific building 5 may comprise more than one local thermal energy consumer assembly 20. One specific building 5 may comprise more than one local thermal energy generator assembly 30. One specific building 5 may comprise both a local thermal energy consumer assembly 20 and a local thermal energy generator assembly 30.

The local thermal energy consumer assembly 20 is acting as a thermal sink. Hence, the local thermal energy consumer assembly 20 is arranged to remove thermal energy from the thermal energy circuit 10. Or in other words, the local thermal energy consumer assembly 20 is arranged to transfer thermal energy from heat transfer liquid of the thermal energy circuit 10 to surroundings of the local thermal energy consumer assembly 20. This is achieved by transferring thermal energy from heat transfer liquid taken from the hot conduit 12 to surroundings of the local thermal energy consumer assembly 20, such that heat transfer liquid that is returned to the cold conduit 14 has a temperature lower than the first temperature and preferably a temperature equal to the second temperature.

The local thermal energy generator assembly 30 is acting as a thermal source. Hence, the local thermal energy generator assembly 30 is arranged to deposit thermal energy to the thermal energy circuit 10. Or in other words, the local thermal energy generator assembly 30 is arranged to transfer thermal energy from its surroundings to heat transfer liquid of the thermal energy circuit 10. This is achieved by transferring thermal energy from surroundings of the local thermal energy generator assembly 30 to heat transfer liquid taken from the cold conduit 12, such that the heat transfer liquid that is returned to the hot conduit 12 has a temperature higher than the second temperature and preferably a temperature equal to the first temperature.

The one or more local thermal energy consumer assemblies 20 may be installed in the buildings 5 as local heaters for different heating needs. As a non-limiting example, a local heater may be arranged to deliver space heating or hot tap hot water preparation. Alternatively, or in combination, the local heater may deliver pool heating or ice- and snow purging. Hence, the local thermal energy consumer assembly 20 is arranged for deriving heat from heat transfer liquid of the hot conduit 12 and creates a cooled heat transfer liquid flow into the cold conduit 14. Hence, the local thermal energy consumer assembly 20 fluidly interconnects the hot and cool conduits 12, 14 such that hot heat transfer liquid can flow from the hot conduit 12 through the local thermal energy consumer assembly 20 and then into the cool conduit 14 after thermal energy in the heat transfer liquid has been consumed by the local thermal energy consumer assembly 20. The local thermal energy consumer assembly 20 operates to draw thermal energy from the hot conduit 12 to heat the building 5 and then deposits the cooled heat transfer liquid into the cool conduit 14.

The one or more local thermal energy generator assemblies 30 may be installed in different buildings 5 as local coolers for different cooling needs. As a non-limiting example, a local cooler may be arranged to deliver space cooling or cooling for freezers and refrigerators. Alternatively, or in combination, the local cooler may deliver cooling for ice rinks and ski centers or ice- and snow making. Hence, the local thermal energy generator assembly 30 is deriving cooling from heat transfer liquid of the cold conduit 14 and creates a heated heat transfer liquid flow into the hot conduit 12. Hence, the local thermal energy generator assembly 30 fluidly interconnects the cold and hot conduits 14, 12 such that cold heat transfer liquid can flow from the cold conduit 14 through the local thermal energy generator assembly 30 and then into the hot conduit 12 after thermal energy has been generated into the heat transfer liquid by the local thermal energy generator assembly 30. The local thermal energy generator assembly 30 operates to extract heat from the building 5 to cool the building 5 and deposits that extracted heat into the hot conduit 12.

The local thermal energy consumer assembly 20 is selectively connected to the hot conduit 12 via a non-disclosed valve and a non-disclosed pump. Upon selecting the connection of the local thermal energy consumer assembly 20 to the hot conduit 12 to be via the valve, heat transfer liquid from the hot conduit 12 is allowed to flow into the local thermal energy consumer assembly 20. Upon selecting the connection of the local thermal energy consumer assembly 20 to the hot conduit 12 to be via the pump, heat transfer liquid from the hot conduit 12 is pumped into the local thermal energy consumer assembly 20.

The local thermal energy generator assembly 30 is selectively connected to the cold conduit 14 via a non-disclosed valve and a non-disclosed pump. Upon selecting the connection of the local thermal energy generator assembly 30 to the cold conduit 14 to be via the valve, heat transfer liquid from the cold conduit 14 is allowed to flow into the local thermal energy generator assembly 30. Upon selecting the connection of the local thermal energy generator assembly 30 to the cold conduit 14 to be via the pump, heat transfer liquid from the cold conduit 14 is pumped into the local thermal energy generator assembly 30.

Preferably, the demand to inhale or exhale thermal energy using the local thermal energy consumer assemblies 20 and the local thermal energy generator assemblies 30 is made at a defined temperature difference. A temperature difference in the range of 5-16°C, preferably in the range of 7-12°C, more preferably 8-10°C corresponds to optimal flows through the system.

The local pressure difference between the hot and cold conduits 12, 14 may vary along the thermal energy circuit 10. Especially, the local pressure difference between the hot and cold conduits 12, 14 may vary from positive to negative pressure difference seen from one of the hot and cold conduits 12, 14. Hence, sometimes a specific local thermal energy consumer/generator assembly 20, 30 may need to pump heat transfer liquid there through and sometimes the specific local thermal energy consumer/generator assembly 20, 30 may need to let heat transfer liquid flow through there through. Accordingly, it will be possible to let all the pumping within the system 1 to take place in the local thermal energy consumer/generator assemblies 20, 30. Due to the limited flows and pressures needed small frequency-controlled circulation pumps may be used.

The basic idea of the district thermal energy distribution system 1 as described above and which is illustrated in Fig. 1 is based on the insight by the applicant that modern day cities by them self provide thermal energy that may be reused within the city. The reused thermal energy may be picked up by the district thermal energy distribution system 1 and be used for e.g. space heating or hot tap water preparation. Moreover, increasing demand for space cooling will also be handled within the district thermal energy distribution system 1. Within the district thermal energy distribution system 1 buildings 5 within the city are interconnected and may in an easy and simple way redistribute low temperature waste energy for different local demands.

In order to balance the thermal energy within the district thermal energy distribution system 1, the system 1 may further comprise a thermal server plant 40. The thermal server plant 40 functions as an external thermal source and/or thermal sink. The function of the thermal server plant 40 is to maintain the temperature difference between the hot and cold conduits 12, 14 of the thermal energy circuit 10. The function of the thermal server plant 40 is further to regulate the pressure difference between the hot and cold conduits 12, 14 of the thermal energy circuit 10.

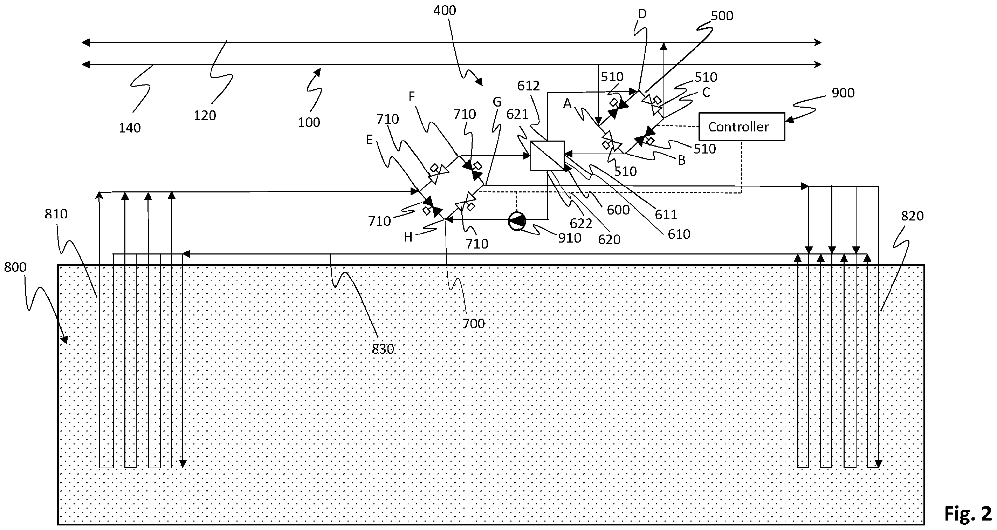

Now turning to Fig. 2, a first embodiment of a thermal energy balancing device 400 according to the invention is disclosed. The thermal energy balancing device may be integrated in the prior art system described above with reference to Fig. 1.

The thermal energy balancing device 400 comprises a primary side valve arrangement 500, a heat exchanger 600, and a secondary side valve arrangement 700. The thermal energy balancing device 400 is connected to a thermal energy circuit 100 via the primary side valve arrangement 500 and to a well arrangement 800 via the secondary side valve arrangement 700.

The thermal energy balancing device 400 is configured to be connected to the thermal energy circuit 100 which comprises a hot conduit 120 and a cold conduit 140. The overall design and function of the thermal energy circuit 100 is the same as that described above with reference to Fig. 1. Thus, the features of the prior art circuit described above are equally applicable and to avoid undue repetition, reference is made to the above.

The hot conduit 120 is like in the prior art system configured to allow district heat transfer liquid of a first temperature to flow therethrough. Correspondingly, the cold conduit 140 is configured to allow district heat transfer liquid of a second temperature to flow therethrough. The second temperature is lower than the first temperature. The flow in the hot conduit 120 and the cold conduit 140 may be bidirectional.

In case the district heat transfer liquid is water, a suitable normal operation hot temperature range for district heat transfer liquid in the hot conduit 12 is between 5 and 45°C and a suitable normal operation cold temperature range for district heat transfer liquid in the cold conduit 14 is between 0 and 40° C. A suitable temperature difference between the first and second temperatures is in the range of 5-16°C, preferably in the range of 7-12°C, more preferably 8-10°C.

The heat exchanger 600 is a liquid-to-liquid heat exchanger. The heat exchanger 600 may be a water-to-water heat exchanger. It is however to be understood that other liquids than water may be used. The heat exchanger 600 may be part of an existing infrastructure, such as an existing cooling or heating machine in a building.

The heat exchanger 600 comprises a liquid phase primary side 610 and a liquid phase secondary side 620. The liquid phase primary side 610 comprises one primary inlet 611 and one primary outlet 612 allowing a flow of district heat transfer liquid to pass across the liquid phase primary side 610. The primary inlet 611 and the primary outlet 612 are connected to the primary side valve arrangement 500. The primary side valve arrangement 500 is arranged in fluid communication with the hot conduit 120 and with the cold conduit 140.

The connection of the valve arrangement 500 to the hot and cold conduits 120, 140 may be made via non-disclosed service valves. The service valves may be used for connecting and disconnecting the valve arrangement 500 and thereby the heat exchanger 600 to/from the thermal energy circuit 100.

The liquid phase secondary side 620 comprises one secondary inlet 621 and one secondary outlet 622 allowing a flow of heat transfer geothermal liquid to pass across the liquid phase secondary side 620. The secondary inlet 621 and the secondary outlet 622 are connected to the secondary side valve arrangement 700. The secondary side valve arrangement 700 is arranged in fluid communication with the well arrangement 800 comprising a warm well 810 and a cold well 820.

The primary side valve arrangement 500 comprises four valves 510 that are interconnected in series to form a closed loop. Each valve 510 is configured as a valve of the on/off-type. It is however to be understood that other valve types are equally applicable. The closed loop comprises four connections points A, B, C, D, with one connection point between two adjacent valves 510. The hot conduit 120 is arranged in fluid communication with the primary side valve arrangement 500 via a conduit connecting to the first connection point A. The primary side inlet 611 of the heat exchanger 600 is arranged in fluid communication with the primary side valve arrangement 500 via a conduit connecting to the second connection point B. The cold conduit 140 is arranged in fluid communication with the primary side valve arrangement 500 via a conduit connecting to the third connection point C. The primary outlet 612 of the heat exchanger 600 is arranged in fluid communication with the primary side valve arrangement 500 via a conduit connecting to the fourth connection point D. Thereby, depending on how the four valves 510 are set, the flow between the heat exchanger 600 and the hot and cold conduits 120, 140 respectively may be controlled.

The primary side valve arrangement 500 is thus configured to direct a flow of district heat transfer liquid from the inlet 611 to the outlet 612 when the primary side valve arrangement 500 is set into the heat exhale mode and when the primary side valve arrangement is set into the heat inhale mode. Accordingly, one and the same inlet on the primary side 610 of the heat exchanger 600 is used, no matter if the thermal energy balancing device 400 is set to operate in an exhale mode or an inhale mode. Only the conduits from which the liquid is fed from and returned to are altered, and this is made by controlling the valves 510 of the primary side valve arrangement 500.

The secondary side valve arrangement 700 comprises four valves 710 that are interconnected in series to form a closed loop. Each valve 710 is configured as a valve of the on/off-type. It is however to be understood that other valve types are equally applicable. The closed loop comprises four connections points E, F, G, H, with one connection point between two adjacent valves 710.

The warm well 810 is arranged in fluid communication with the secondary side valve arrangement 700 via a conduit connecting to the first connection point E. The secondary inlet 621 of the heat exchanger 600 is arranged in fluid communication with the secondary side valve arrangement 700 via a conduit connecting to the second connection point F. The cold well 820 is arranged in fluid communication with the secondary side valve arrangement 700 via a conduit connecting to the third connection point G. The secondary outlet 622 of the heat exchanger 600 is arranged in fluid communication with the secondary side valve arrangement 700 via a conduit connecting to the fourth connection point H. Thereby, depending on how the four valves 710 are set, the flow between the heat exchanger 600 and the hot and cold wells 810, 820 respectively may be controlled.

The secondary side valve arrangement 700 is thus configured to direct a flow of heat transfer geothermal liquid from the inlet 621 to the outlet 622 when the secondary side valve arrangement 700 is set into the heat exhale mode and when the secondary side valve arrangement is set into the heat inhale mode. Accordingly, one and the same inlet on the secondary side 620 of the heat exchanger 600 is used, no matter if the thermal energy balancing device 400 is set to operate in an exhale mode or an inhale mode. Only the conduits from which the liquid is fed from and returned to are altered, and this is made by controlling the valves 710 of the secondary side valve arrangement 700.

The primary side valve arrangement 500 and the secondary side valve arrangement 700 may be controlled by a controller 900. The controller 900 is connected to the primary and secondary valve arrangements 500, 700 to selectively allow a setting of the valves 510, 710 to thereby control the flow through the valve arrangements 500, 700 depending on which operation mode of the thermal energy balancing device 400 is desired, i.e. if a heat exhale mode is desired or if a heat inhale mode is desired.

The thermal energy balancing device 400 may further comprises an optional pump 910. The pump 910 may by way of example be arranged in a position between the secondary side valve arrangement 700 and the heat exchanger 600. Thereby there is no need for any submerged pumps. This facilitates installation and maintenance.

The pump 910 may be connected to the controller 900 to thereby be controlled thereby. In the event it is determined by the controller 900 that there is no need for any promotion of the flow, the pump 910may be set to allow a through-flow.

The warm and cold wells 810, 820 are in the embodiment of Fig. 2 disclosed as two discrete wells that are arranged in the bedrock on two different geographical locations. The bedrock may by way of example be clay or the like. The temperature in the warm well is higher than the temperature in the cold well. In the disclosed embodiment, each well comprises a closed loop conduit.

The two closed loop conduits are hydraulically interconnected via connection conduit 830. Depending on how the valves 710 in the secondary side valve arrangement 700 are set, liquid may be transferred either from the warm well 810 to the cold well 820 while passing from the inlet 621 to the outlet 622 of the secondary side of the heat exchanger 600, or from the cold well 820 to the warm well 810 while passing from the inlet 621 to the outlet 622 of the secondary side of the heat exchanger 600.

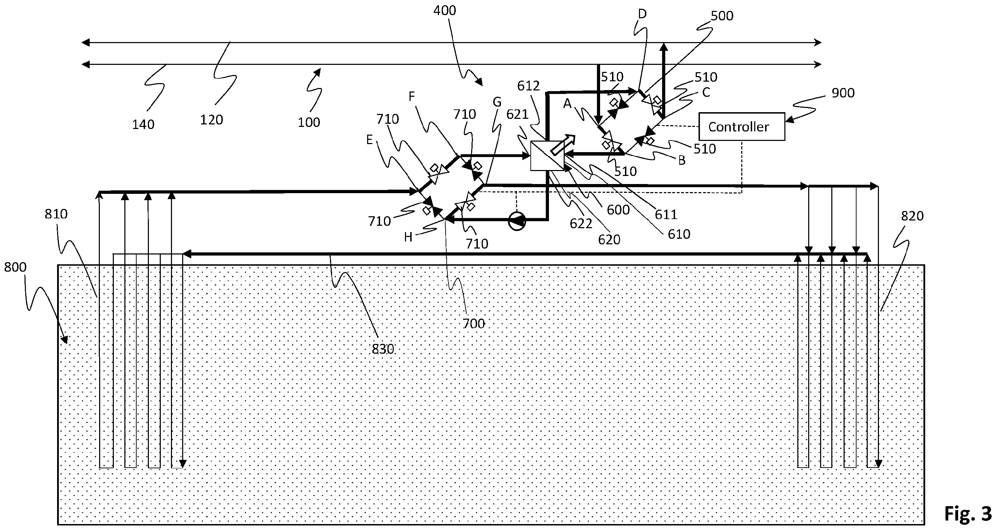

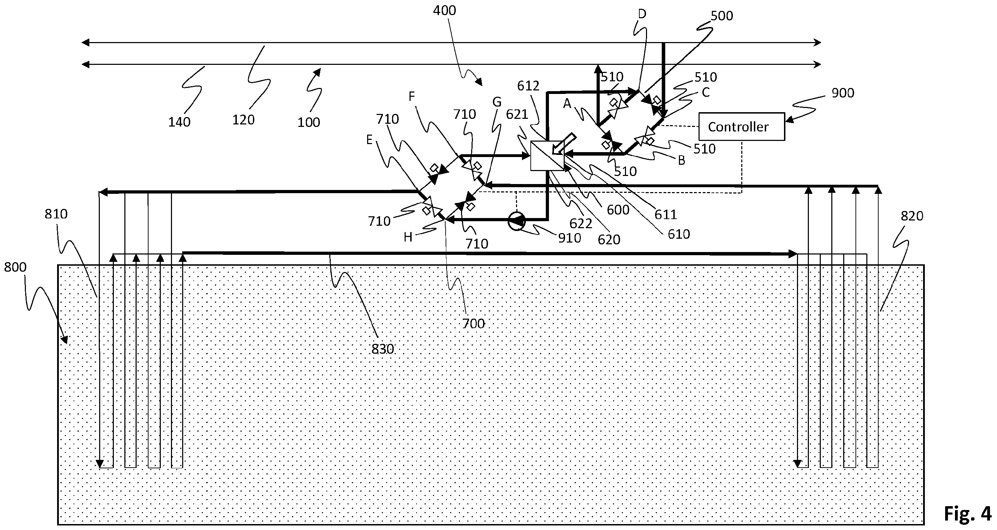

In the following, the two modes of the thermal energy balancing device 400 will be exemplified with reference to Figs. 3 and 4. The two modes differ in how the individual valves 510, 710 in the primary and secondary valve arrangements 500, 700 are set and hence how the flows of district heat transfer liquid and heat transfer geothermal liquid respectively are allowed to flow.

To facilitate understanding, a closed valve is illustrated by a solid black valve icon, whereas an open valve is illustrated by a solid white valve icon. Also, to facilitate understanding, Figs. 3 and 4 have been simplified by removing some components.

Starting with Fig. 3, the inhale mode, is illustrated. In the inhale mode, the thermal energy balancing device 400 is set to supply heat to the hot conduit 120 to thereby allow clients to provide a heating effect.

By closing the valves 510 between connection points B-C and A-D, while opening the valves 510 between connection points A-B and C-D, a flow of district heat transfer fluid is allowed from the cold conduit 140, through the open valve 510 between connection points A-B, into the liquid phase primary side 610 of the heat exchanger 600 via its inlet 611, across the liquid phase primary side 610 of the heat exchanger 600, out of the heat exchanger 600 via its outlet 612, through the open valve 510 between the connection points D-C and into the hot conduit 120. As the district heat transfer fluid flows across the liquid phase primary side 610 of the heat exchanger 600, heat may be inhaled from a flow of heat transfer geothermal liquid on the secondary side 620 of the heat exchanger 600. To allow this inhalation, the valves of the secondary side valve arrangement 700 are set so that the valves 710 between the connection points H-E and F-G are closed, while the valves 710 between the connection points H-G and E-F are opened.

Thereby a flow of heat transfer geothermal liquid is allowed from the warm well 810, through the open valve 710 between the connection points E-F, into the secondary phase side 620 of the heat exchanger 600 via its inlet 621, across the secondary phase side 620 of the heat exchanger 600, out of the heat exchanger 600 via its outlet 622, through the open valve 710 between the connection points H-G and into the cold well 820. As the hot heat transfer geothermal liquid flows across the secondary phase side 620 of the heat exchanger 600, heat will be transferred to the primary side 610 of the heat exchanger 600 from where it may be inhaled by the district heat transfer liquid.

As a result of the warm well 810 and the cold well 820 being hydraulically interconnected via the connection conduit 830, the amount of heat transfer geothermal liquid removed from the warm well 810 will be returned to it from the cold well 820.

This specific operation mode may by way of example be used during the colder period of a year in areas which have a hot climate during the major part of the year to provide heating of homes, offices, tap water etc. Thus, the inhale mode is typically run when clients connected to the thermal energy circuit 100 want a heating effect.

Now turning to Fig. 4, system described above in view of Fig. 3 is now set to exhale mode. In all other aspects the system is the same. In the exhale mode, the thermal energy balancing device 400 is set to remove heat from the hot conduit 120 to thereby allow clients to provide a cooling effect.

By closing the valves 510 between connection points A-B and C-D, while opening the valves 510 between connection points A-D and C-D, a flow of district heat transfer fluid is allowed from the hot conduit 120, through the open valve 510 between connection points C-B, into the liquid phase primary side 610 of the heat exchanger 600 via its inlet 611, across the liquid phase primary side 610 of the heat exchanger 600, out of the heat exchanger 600 via its outlet 612, through the open valve 510 between the connection points D-A and into the cold conduit 140. As the hot district heat transfer fluid flows across the liquid phase primary side 610 of the heat exchanger 600, heat may be exhaled into the flow of heat transfer geothermal liquid on the secondary side 620 of the heat exchanger 600. To allow this exhalation, the
valves of the secondary side valve arrangement 700 are set so that the valves 710 between the connection points E-F and G-H are closed, while the valves 710 between the connection points F-G and E-H are opened.

Thereby a flow of heat transfer geothermal liquid is allowed from the cold well 820, through the open valve 710 between the connection points G-F, into the secondary phase side 620 of the heat exchanger 600 via its inlet 621, across the secondary phase side 620 of the heat exchanger 600, out of the heat exchanger 600 via its outlet 622, through the open valve 710 between the connection points H-E and into the warm well 810. As the cold heat transfer geothermal liquid flows across the secondary phase side 620 of the heat exchanger 600, heat will be inhaled from the district heat transfer liquid on the primary side 610 of the heat exchanger 600. Thereby the flow of district heat transfer liquid with a reduced temperature will be returned to the cold conduit 140.

As a result of the warm well 810 and the cold well 820 being hydraulically interconnected via the connection conduit 830, the amount of heat transfer geothermal liquid removed from the cold well 820 will be returned from the warm well 810, and vice versa depending on if the system is set into a inhale mode or exhale mode.

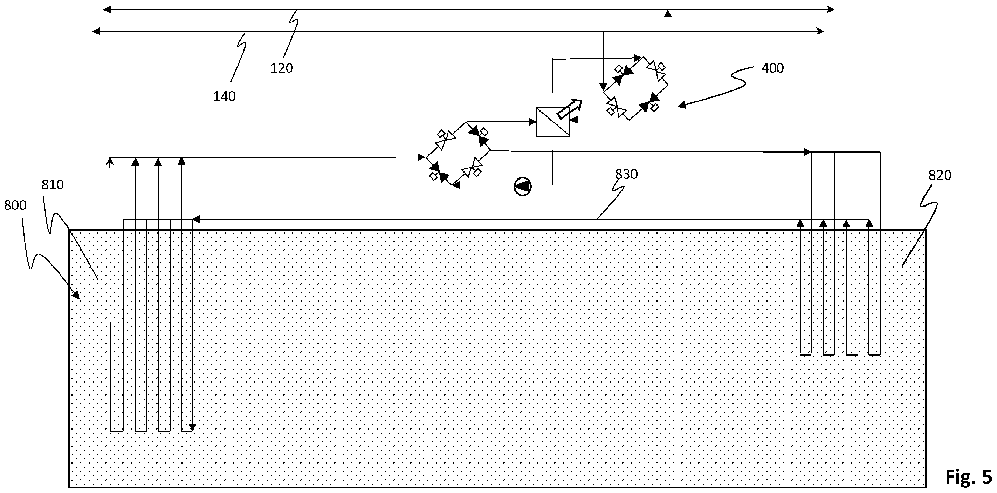

Now turning to Fig. 5, an alternative to the embodiments disclosed in Figs 3 and 4 is disclosed. The embodiment in Fig. 5 differs from the embodiment of Figs. 3 and 4 in the design of the well arrangement 800. In all other aspects, the design of the system is the same. The warm well 810 and the cold well 820 are vertically and horizontally separated. The warm well 810 is deeper than the cold well. The skilled person realizes that the same principle is equally applicable with the cold well being deeper than the warm well.

Like in the embodiment of Figs 3 and 4, there is a hydraulic communication between the two wells 810, 820 by conduit 830. Accordingly, the amount of heat transfer geothermal liquid removed from the cold well 820 will be returned from the warm well 810 and vice versa depending on if the system is set into a inhale mode or exhale mode.

In the disclosed embodiment, the thermal energy balancing device 400 is set to an inhale mode and operates in the very same manner as that previously discussed with reference to Fig. 3. If the thermal energy balancing device 400 instead should be set to an exhale mode it operates in the very same manner as that previously discussed with reference to Fig. 4. Thus, to avoid undue repetition regarding the operation, reference is made to the above.

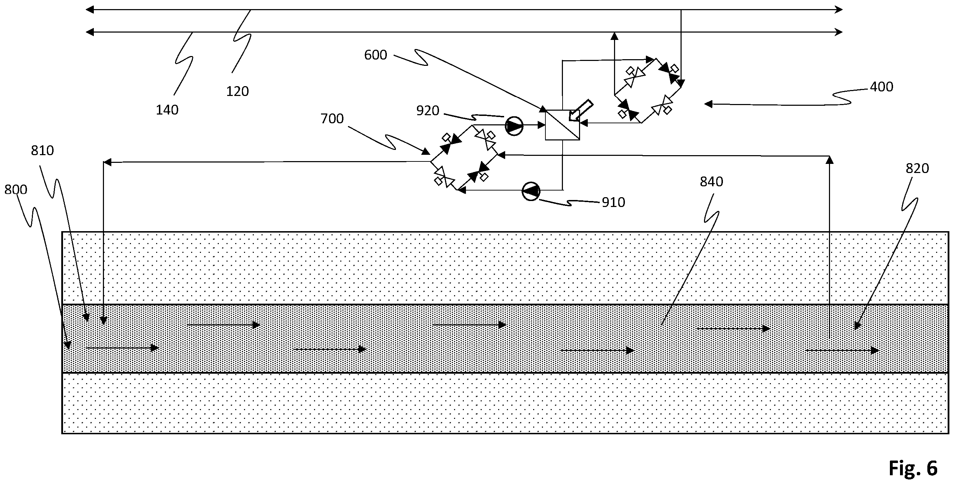

Now turning to Fig. 6, a third embodiment being an alternative to the embodiments disclosed in Figs. 3 and 4 is disclosed. The third embodiment differs from the previous disclosure in the design of the well arrangement 800 and also in an additional pump 920 being arranged in a position between the secondary valve arrangement 700 and the heat exchanger 600. In all other aspects, the design of the system is the same.

In the third embodiment, the well arrangement 800 is of an open loop type, i.e. the warm well 810 and the cold well 820 are hydraulically interconnected without any physical conduit. In the disclosed embodiment, the hydraulic connection is instead provided by a naturally occurring flow 840 of heat transfer geothermal liquid in the bedrock. The flow may by way of example be groundwater. Thus, there is no need for any conduit connecting the warm well 810 and the cold well 820. The warm well 810 and the cold well 820 are horizontally separated by arranging the inlet and outlets to the wells well separated.

In the disclosed embodiment, the thermal energy balancing device 400 is set to an exhale mode and operates in the very same manner as that previously discussed with reference to Fig. 4. The flow of heat transfer geothermal liquid exiting the heat exchanger 600 is returned to the well arrangement 800 via its warm well 810 and the thus released heat transfer geothermal liquid is hydraulically transferred from the warm well 810 to the cold well 820 via the stream 840 in the well arrangement 800. To better promote this flow, one or more pumps 910, 920 may be used. Two pumps 910, 920 are used in the disclosed embodiment.

This third embodiment has the advantage in that it as a reduced installation cost since there is no need of providing any hydraulic conduit between the hot and cold wells. Also, the one or more pumps 910, 920 may be arranged in a position where they are easily accessible. Thus, there is no need of providing any submerged pump(s).

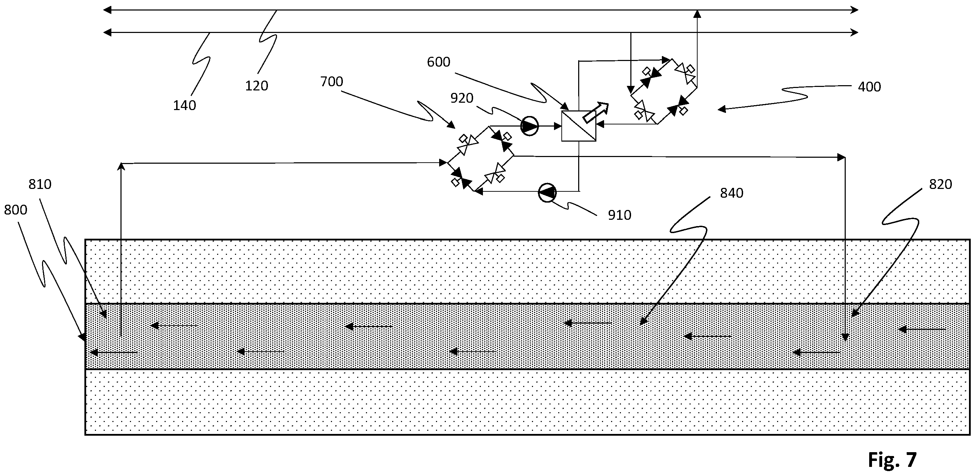

Now turning to Fig. 7, the third embodiment discussed in view of Fig. 6 is disclosed when set to operate in an inhale mode. In all other aspects, the design of the system is the same as that disclosed in Fig. 6. Thus, in the disclosed embodiment, the thermal energy balancing device 400 is set to an inhale mode. The flow of heat transfer geothermal liquid exiting the heat exchanger 600 is returned to the well arrangement 800 via its cold well 820 and the thus released heat transfer geothermal liquid is hydraulically transferred from the cold well 820 to the warm well 820 via the stream 840 in the well arrangement 800. To better promote this flow, one or more pumps 910, 920 may be used. Two pumps 910, 920 are used in the disclosed embodiment.

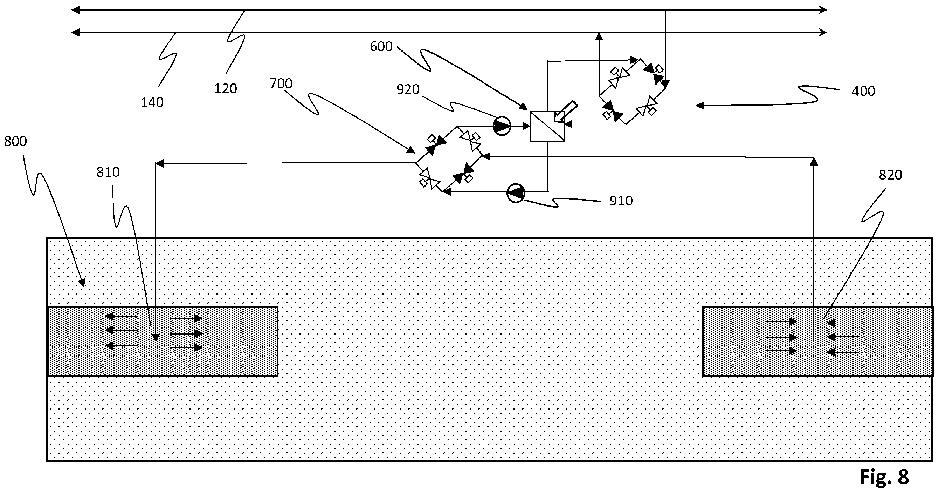

Now turning to Fig. 8, a fourth embodiment being an alternative to the embodiments disclosed in Figs 3 and 4 is disclosed. The fourth embodiment differs from the previous disclosure in the design of the well arrangement 800 and also in an additional pump 920 being arranged in a position between the secondary valve arrangement 700 and the heat exchanger 600. In all other aspects, the design of the system is the same.

In the fourth embodiment, the well arrangement 800 is of an open loop type without any hydraulic connection between the warm well 810 and the cold well 820. Accordingly, there is no communication between the two wells other than that provided by the secondary valve arrangement 700. The warm and cold wells 810, 820 are provided as two discrete wells which are well separated and hence without any natural flow therebetween. The bedrock may by way of example be clay or the like. The temperature in the warm well 810 is higher than the temperature in the cold well 820.

In the disclosed embodiment, the thermal energy balancing device 400 is set to an exhale mode and operates in the very same manner as that previously discussed with reference to Fig. 4 with the difference that the secondary valve arrangement 700 receives heat transfer geothermal liquid from the cold well 820 and passes it across the secondary phase side of the heat exchanger where it inhales heat. The thus heated heat transfer geothermal liquid is then fed through the secondary valve arrangement 700 to the warm well 810 where the liquid is released. To better promote this flow, one or more pumps 910, 920 may be used. Two pumps 910, 920 are used in the disclosed embodiment. This fourth embodiment has the advantage in that it has a reduced installation cost since there is no need of providing any hydraulic conduit between the warm and cold wells. Also, the one or more pumps may be arranged in a position where they are easily accessible. Thus, there is no need of providing any submerged pump(s).

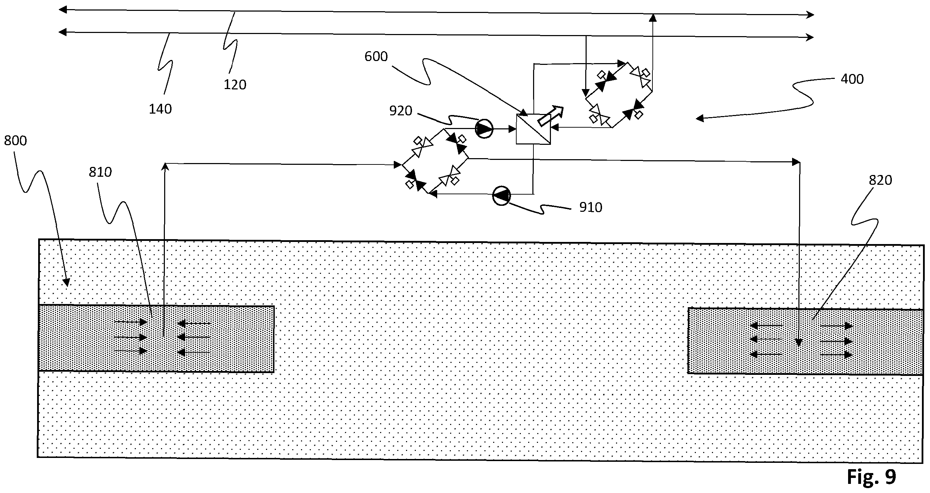

Now turning to Fig. 9, the fourth embodiment is disclosed where the thermal energy balancing device 400 is set to a heat inhale mode. The thermal energy balancing device 400 operates in the very same manner as that previously discussed with reference to Figs. 3 and 8 with the difference that the secondary valve arrangement 700 receives heat transfer geothermal liquid from the warm well 810 and passes it across the secondary phase side of the heat exchanger where it exhales heat. The thus cooled heat transfer geothermal liquid is then fed through the secondary valve arrangement 700 to the cold well 820 where the liquid is released.

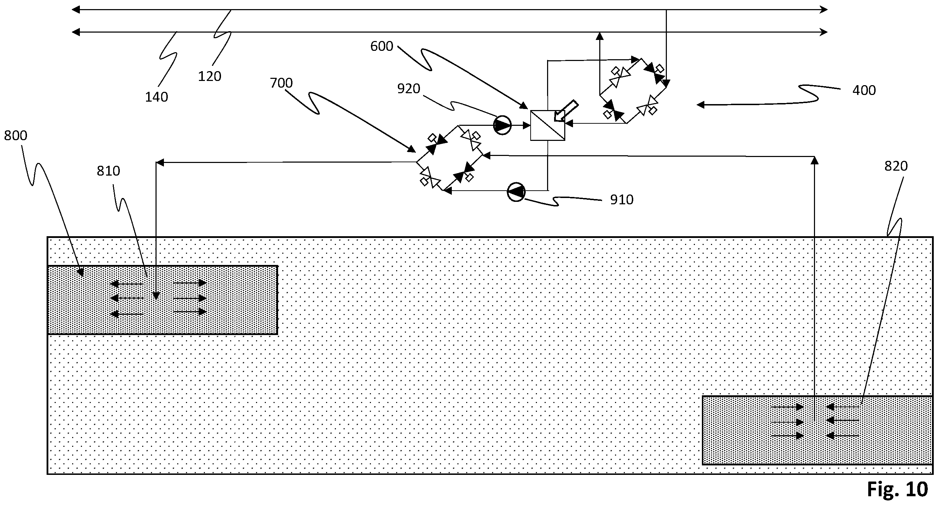

Now turning to Fig. 10, a fifth embodiment is disclosed. The fifth embodiment differs from the fourth embodiment disclosed in Fig. 8 by the warm and cold wells 810, 820 being vertically separated from each other. In all other aspects the two embodiments are the same. Thus, the well arrangement 800 is of an open loop type without any hydraulic connection between the warm well 810 and the cold well 820. Accordingly, there is no communication between the two wells other than that provided by the secondary valve arrangement 700.

Like the fourth embodiment disclosed in Fig. 8, the thermal energy balancing device 400 is set to an exhale mode and operates in the very same manner as that previously discussed with reference to Fig. 8.

The two wells are arranged on different depths in the bedrock. The cold well 820 is arranged on a deeper level than the warm well 810. The skilled person realizes that the same principle is equally applicable with the warm well being arranged on a deeper level than the cold well.

If the thermal energy balancing device 400 instead should be set to an inhale mode it operates in the very same manner as that previously discussed with reference to Fig. 3. Thus, to avoid undue repetition regarding the operation, reference is made to the above.

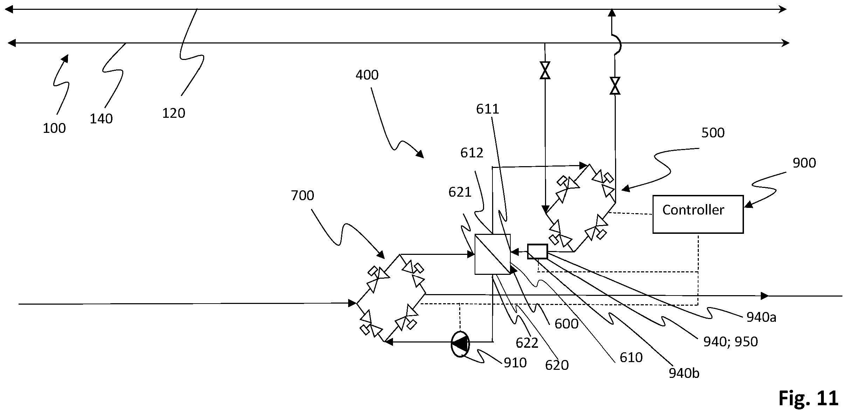

Now turning to Fig. 11, the thermal energy balancing device 400, no matter which embodiment has been described above, may further comprise a regulator 940 and a pressure difference determining device 950. The overall design of the thermal energy balancing device 400 in Fig. 11 is the same as previously discussed in view of Figs. 2-10. To facilitate understanding, the connections between the secondary side valve arrangement 700 and the hot and cold wells have been omitted.

The thermal energy balancing device 400 is provided with a pressure difference determining device 950 which is configured to sense local pressure in the hot conduit 120 and the cold conduit 140 respectively and determine a difference between the two pressures. The pressure difference determining device 950 is adapted to determine a local pressure difference, Δp_{local}, between a local hot conduit pressure, pₕ, of district heat transfer liquid of the hot conduit 120 and a local cold conduit pressure, p_{c}, of district heat transfer liquid of the cold conduit 140, Δp_{local}=pₕ-p_{c}. The regulator 940 is configured to, based on the determined local pressure difference, regulate the flow of district heat transfer liquid between the hot and cold conduits 120, 140.

The regulator 940 is disclosed in Fig. 11 as being arranged in a position between the hot and cold conduits 120, 140. The regulator 940 is disclosed as being arranged between the primary side valve arrangement 500 and the primary side 610 of the heat exchanger 600. The regulator 940 may be a small frequency-controlled circulation pump. The regulator 940 may be arranged either in a position before the inlet 611 to the primary side of the heat exchanger 600, or after (not disclosed) the outlet 612 from the primary side of the heat exchanger 600.

The purpose of the regulator 940 is to facilitate the flow of district heat transfer liquid to the heat exchanger 600 in the event the determined pressure difference between the hot conduit 120 and the cold conduit 140 should be below a predetermined set value. As long as the determined local pressure difference is determined to be above a set value, the regulator 940 may be set into a passive mode and act as an open valve allowing a flow of district heat transfer fluid to pass therethrough. Should the determined local pressure difference instead be determined to be below the set value, the regulator 940 may be set into an active mode and pump the district heat transfer liquid to thereby increase the pressure of the district heat transfer fluid as seen in a position downstream the regulator 940.

The regulator 940 and the pressure determining device 950 may be connected to the controller 900. The controller 900 may be the same as is used to control the primary side valve arrangement 500 and/or the secondary side valve arrangement 700.

The pressure difference determining device 950 may be embodied in many different ways as will be given below. The pressure difference determining device 950 may, as is illustrated in Fig. 11, be integrated in the regulator 940. One example of such integrated regulator 940 and pressure difference determining device 950 is a differential pressure regulator.

If the detected pressure in a position adjacent an inlet end 940a of the regulator 940 should be determined to be lower than a predetermined set value, the regulator 940 is activated. Thereby, the pressure at the outlet end 940b of the regulator 940, and hence the pressure of the district heat transfer liquid supplied from a first conduit to a second fluid in the thermal energy circuit 100 will be increased. Thereby a detected local pressure difference between the hot conduit 120 and the cold conduit 140 may be adjusted. In the event of a heat exhale mode, the first conduit will be the hot conduit 120 and the second conduit will be the cold conduit 140. Correspondingly, in the event of a heat inhale mode, the first conduit will be the cold conduit 140 and the second conduit will be the hot conduit 120.

Should the detected pressure difference be determined to be allowable, the regulator 940 will instead be set in a passive mode and allow a bypass of district heat transfer liquid.

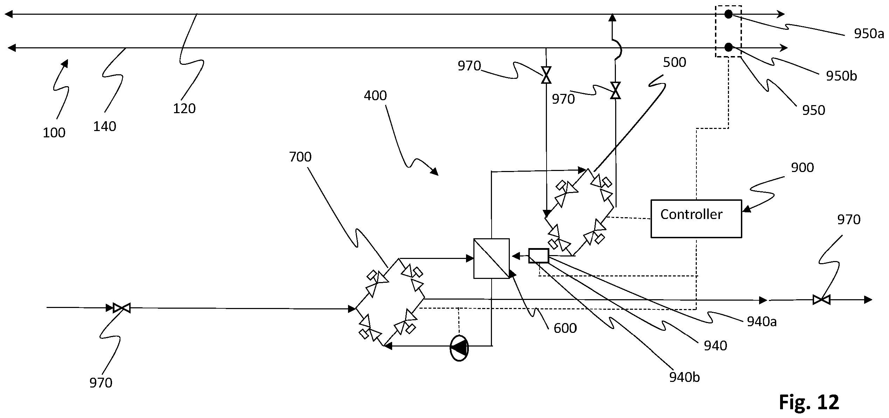

In another embodiment, see Fig. 12 the pressure difference determining device 950 may be arranged as an independent device separate from the regulator 940. In this embodiment, the pressure difference determining device 950 comprises a hot conduit pressure determining unit 950a which is connected to the hot conduit 120 for measuring the hot conduit local pressure, pₕ. Further, the pressure difference determining device 950 comprises a cold conduit pressure determining unit 950b which is connected to the cold conduit 140 for measuring the cold conduit local pressure, p_{c}. The local pressure difference, Δp_{local}, is then determined as Δp_{local}=pₕ-p_{c}. If the determined local pressure difference is determined to be below a predetermined set value, the regulator 940 is activated. Thereby, the pressure at the outlet end 940b of the regulator 940, and hence the pressure of the district heat transfer liquid supplied from a first conduit to a second fluid will be increased. In the event of a heat exhale mode, the first conduit will be the hot conduit 120 and the second conduit will be the cold conduit 140. Correspondingly, in the event of a heat inhale mode, the first conduit will be the cold conduit 140 and the second conduit will be the hot conduit 120. Thereby a detected local pressure difference between the hot conduit 120 and the cold conduit 140 may be adjusted to be within a predetermined set pressure difference.

Should the detected pressure difference be determined to be allowable, the regulator 940 will instead be set in a passive mode and allow a bypass of heat transfer liquid.

No matter embodiment, the thermal energy balancing device may be provided with service valves. The service valves may be used for connecting and disconnecting the primary and secondary valve arrangements 500, 700 and thereby the heat exchanger 600 to/from the thermal energy circuit 100 and the warm and cold wells. One such, highly schematic example is disclosed in Fig 12 with four service valves 970. The skilled person realizes that the number and positions of the service valves may be varied within the scope of the invention.

The person skilled in the art realizes that the present invention by no means is limited to the preferred embodiments described above. On the contrary, many modifications and variations are possible within the scope of the appended claims.

The primary and secondary valve arrangements 500, 700 have been described as comprising four valves each which are interconnected in a closed loop with connection points to relevant conduits and ports of the heat exchanger. The skilled person realizes that the number of valves and their mutual interconnection and their connection with the heat exchanger and the conduits may be varied with remained function.

The regulator has been disclosed as being arranged between the valve arrangement and the liquid phase primary side of the heat exchanger. The skilled person understands that other positions are possible.

Also, the skilled person realizes that a local pressure difference may be determined in a number of ways within the scope of the claims.

## Claims

1. A thermal energy balancing device (400) connected to a thermal energy circuit (100) comprising a hot conduit (120) configured to allow a district heat transfer liquid of a first temperature to flow therethrough, and a cold conduit (140) configured to allow district heat transfer liquid of a second temperature to flow therethrough, the second temperature being lower than the first temperature, the thermal energy balancing device (400) comprising:
a warm well (810);
a cold well (820);
a heat exchanger (600) comprising a primary side (610) and a secondary side (620);
a primary side valve arrangement (500) connecting the primary side of the heat exchanger (600) to the cold conduit (140) and to the hot conduit (120); and
a secondary side valve arrangement (700) connecting the secondary side of the heat exchanger (600) to the cold well (820) and to the warm well (810);
wherein the thermal energy balancing device (400) is configured to be selectively set in a heat exhale mode and in a heat inhale mode,
wherein when the thermal balancing device (400) is set into the heat exhale mode, the primary side valve arrangement (500) is configured to direct district heat transfer liquid to flow from the hot conduit (120) via the primary side (610) of the heat exchanger (600) to the cold conduit (140), and the secondary side valve arrangement (700) is configured to direct heat transfer geothermal liquid to flow from the cold well (820) via the secondary side (620) of the heat exchanger (600) to the warm well (810);
and wherein when the thermal balancing device (400) is set into the heat inhale mode, the primary side valve arrangement (500) is configured to direct district heat transfer liquid to flow from the cold conduit (140) via the primary side (610) of the heat exchanger (600) to the hot conduit (120), and the secondary side valve arrangement (700) is configured to direct heat transfer geothermal liquid to flow from the warm well (810) via the secondary side (620) of the heat exchanger (600) to the cold well (820).

2. The thermal energy balancing device according to claim 1, wherein the warm and cold wells (810, 820) are closed loop wells, and hydraulically connected via a conduit (830), wherein when the thermal balancing device (400) is set into the heat exhale mode the conduit (830) is configured to conduct heat transfer geothermal liquid from the cold well (820) to the warm well (810), and wherein when the thermal balancing device (400) is set into the heat inhale mode the conduit (830) is configured to conduct heat transfer geothermal liquid from the warm well (810) to the cold well (820).

3. The thermal energy balancing device according to claim 1, wherein the warm and cold wells (810, 820) are open loop wells, wherein the warm and cold wells (810, 820) are hydraulically connected.

4. The thermal energy balancing device according to claim 1, wherein the warm and cold wells (810, 820) are open loop wells, wherein the warm and cold wells (810, 820) are without any hydraulic connection.

5. The thermal energy balancing device according to claim 1, wherein the warm and cold wells (810, 820) are horizontally and/or vertically separated.

6. The thermal energy balancing device according to any of the preceding claims, further comprising a pump (910, 920), the pump being arranged in a position between the secondary side valve arrangement (700) and the heat exchanger (600).

7. The thermal energy balancing device according to any of the preceding claims, wherein the primary side (610) of the heat exchanger (600) comprises an inlet and an outlet, and wherein the primary side valve arrangement (500) is configured to direct a flow of district heat transfer liquid from the inlet to the outlet when the primary side valve arrangement (500) is set into the heat exhale mode and when the primary side valve arrangement (500) is set into the heat inhale mode.

8. The thermal energy balancing device according to any of the preceding claims, wherein the secondary side (620) of the heat exchanger (600) comprises an inlet (621) and an outlet (622), and wherein the secondary side valve arrangement (700) is configured to direct a flow of heat transfer geothermal liquid from the inlet (621) to the outlet (622) when the secondary side valve arrangement (700) is set into the heat exhale mode and when the secondary side valve arrangement (700) is set into the heat inhale mode.

9. The thermal energy balancing device according to any of the preceding claims further comprising a regulator (940) and a pressure difference determining device (950) adapted to determine a local pressure difference, Δp_{local}, between a local hot conduit pressure, pₕ, of district heat transfer liquid of the hot conduit (120) and a local cold conduit pressure, p_{c}, of district heat transfer liquid of the cold conduit (140), Δp_{local}=pₕ-p_{c}; and
wherein the regulator (940) is configured to, based on the determined local pressure difference, regulate the flow of district heat transfer liquid between the hot and cold conduits (120; 140).

10. The thermal energy balancing device according to claim 9, further comprising a controller (900) connected to one or more of the pressure difference determining device (950), the regulator (940), the primary side valve arrangement (500) and the secondary side valve arrangement (700).

## Patentansprüche

1. Wärmeenergieausgleichsvorrichtung (400), die mit einem Wärmeenergiekreislauf (100) verbunden ist, aufweisend eine Warmleitung (120), die eingerichtet ist, den Fluss einer Fernwärmeübertragungsflüssigkeit mit einer ersten Temperatur zu ermöglichen, und eine Kaltleitung (140), die eingerichtet ist, den Fluss einer Fernwärmeübertragungsflüssigkeit mit einer zweiten Temperatur zu ermöglichen, wobei die zweite Temperatur niedriger ist als die erste Temperatur und die Wärmeenergieausgleichsvorrichtung (400) aufweist:
einen Warmbehälter (810);
einen Kaltbehälter (820);
einen Wärmetauscher (600), der eine Primärseite (610) und eine Sekundärseite (620) aufweist;
eine primärseitige Ventilanordnung (500), welche die Primärseite des Wärmetauschers (600) mit der Kaltleitung (140) und der Warmleitung (120) verbindet; und
eine sekundärseitige Ventilanordnung (700), welche die Sekundärseite des Wärmetauschers (600) mit dem Kaltbehälter (820) und dem Warmbehälter (810) verbindet;
wobei die Wärmeenergieausgleichsvorrichtung (400) eingerichtet ist, selektiv in einen Wärmeabgabemodus und in einen Wärmeaufnahmemodus versetzt zu werden,
wobei, wenn die Wärmeausgleichsvorrichtung (400) in den Wärmeabgabemodus versetzt wird, die primärseitige Ventilanordnung (500) eingerichtet ist, Fernwärmeübertragungsflüssigkeit derart zu leiten, dass sie von der Warmleitung (120) über die Primärseite (610) des Wärmetauschers (600) zu der Kaltleitung (140) fließt, und die sekundärseitige Ventilanordnung (700) eingerichtet ist, geothermische Wärmeübertragungsflüssigkeit derart zu leiten, dass sie von dem Kaltbehälter (820) über die Sekundärseite (620) des Wärmetauschers (600) zu dem Warmbehälter (810) fließt;
und wobei, wenn die Wärmeausgleichsvorrichtung (400) in den Wärmeaufnahmemodus versetzt wird, die primärseitige Ventilanordnung (500) eingerichtet ist, Fernwärmeübertragungsflüssigkeit derart zu leiten, dass sie von der Kaltleitung (120) über die Primärseite (610) des Wärmetauschers (600) zu der Warmleitung (140) fließt, und die sekundärseitige Ventilanordnung (700) eingerichtet ist, geothermische Wärmeübertragungsflüssigkeit derart zu leiten, dass sie von dem Warmbehälter (820) über die Sekundärseite (620) des Wärmetauschers (600) zu dem Kaltbehälter (810) fließt.

2. Wärmeenergieausgleichsvorrichtung nach Anspruch 1, wobei der Warmbehälter und der Kaltbehälter (810, 820) Behälter eines geschlossenen Kreislaufs sind und über eine Leitung (830) hydraulisch verbunden sind, wobei wenn die Wärmeausgleichsvorrichtung (830) (400) in den Wärmeabgabemodus versetzt wird, die Leitung eingerichtet ist, geothermische Wärmeübertragungsflüssigkeit von dem Kaltbehälter (820) zu dem 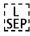 Warmbehälter (810) zu leiten, und wobei wenn die Wärmeausgleichsvorrichtung (400) in den Wärmeaufnahmemodus versetzt wird, die Leitung (830) eingerichtet ist, die geothermische Wärmeübertragungsflüssigkeit von dem Warmbehälter (810) zu dem Kaltbehälter (820) zu leiten.

3. Wärmeenergieausgleichsvorrichtung nach Anspruch 1, wobei der Warmbehälter und der Kaltbehälter (810, 820) Behälter eines offenen Kreislaufs sind, wobei der Warmbehälter und der Kaltbehälter (810, 820) hydraulisch verbunden sind.

4. Wärmeenergieausgleichsvorrichtung nach Anspruch 1, wobei der Warmbehälter und der Kaltbehälter (810, 820) Behälter eines offenen Kreislaufs sind, wobei der Warmbehälter und der Kaltbehälter (810, 820) keine hydraulische Verbindung aufweisen.

5. Wärmeenergieausgleichsvorrichtung nach Anspruch 1, wobei der Warmbehälter und der Kaltbehälter (810, 820) horizontal und/oder vertikal getrennt sind.

6. Wärmeenergieausgleichsvorrichtung nach einem der vorstehenden Ansprüche, ferner aufweisend eine Pumpe (910, 920), wobei die Pumpe in einer Position zwischen der sekundärseitigen Ventilanordnung (700) und dem Wärmetauscher (600) positioniert ist.

7. Wärmeenergieausgleichsvorrichtung nach einem der vorstehenden Ansprüche, wobei die Primärseite (610) des Wärmetauschers (600) einen Einlass und einen Auslass aufweist, und wobei die primärseitige Ventilanordnung (500) eingerichtet ist, einen Fluss von Fernwärmeübertragungsflüssigkeit von dem Einlass zu dem Auslass zu leiten, wenn die primärseitige Ventilanordnung (500) in den Wärmeabgabemodus versetzt wird und wenn die primärseitige Ventilanordnung (500) in den Wärmeaufnahmemodus versetzt wird.

8. Wärmeenergieausgleichsvorrichtung nach einem der vorstehenden Ansprüche, wobei die Sekundärseite (620) des Wärmetauschers (600) einen Einlass (621) und einen Auslass (622) aufweist, und wobei die sekundärseitige Ventilanordnung (700) eingerichtet ist, einen Fluss von geothermischer Wärmeübertragungsflüssigkeit von dem Einlass (621) zu dem Auslass (622) zu leiten, wenn die sekundärseitige Ventilanordnung (700) in den Wärmeabgabemodus versetzt wird und wenn die sekundärseitige Ventilanordnung (700) in den Wärmeaufnahmemodus versetzt wird.

9. Wärmeenergieausgleichsvorrichtung nach einem der vorstehenden Ansprüche, ferner aufweisend einen Regler (940) und eine Druckdifferenzbestimmungsvorrichtung (950), die angepasst ist, eine lokale Druckdifferenz Δpₗₒₖₐₗ zwischen einem lokalen Warmleitungsdruck pₕ einer Fernwärmeübertragungsflüssigkeit der Warmleitung (120) und einem lokalen Kaltleitungsdruck p_{c} einer Fernwärmeübertragungsflüssigkeit der Kaltleitung (140) zu bestimmen, wobei Δpₗₒₖₐₗ = pₕ - p_{c}; und
wobei der Regler (940) eingerichtet ist, basierend auf der bestimmten lokalen Druckdifferenz den Fluss der Fernwärmeübertragungsflüssigkeit zwischen der Warmleitung und der Kaltleitung (120; 140) zu regeln.

10. Wärmeenergieausgleichsvorrichtung nach Anspruch 9, ferner aufweisend eine Steuerung (900), die mit einem oder mehreren von der Druckdifferenzbestimmungsvorrichtung (950), dem Regler (940), der primärseitigen Ventilanordnung (500) und der sekundärseitigen Ventilanordnung (700) verbunden ist.

## Revendications

1. Dispositif d'équilibrage d'énergie thermique (400) raccordé à un circuit d'énergie thermique (100) comprenant un conduit chaud (120) configuré pour permettre à du liquide caloporteur urbain à une première température de s'écouler à travers celui-ci, et un conduit froid (140) configuré pour permettre à du liquide caloporteur urbain à une deuxième température de s'écouler à travers celui-ci, la deuxième température étant inférieure à la première température, le dispositif d'équilibrage d'énergie thermique (400) comprenant :
un puit chaud (810) ;
un puit froid (820) ;
un échangeur de chaleur (600) comprenant un côté primaire (610) et un côté secondaire (620) ;
un ensemble de soupape côté primaire (500) raccordant le côté primaire de l'échangeur de chaleur (600) au conduit froid (140) et au conduit chaud (120) ; et
un ensemble de soupape côté secondaire (700) raccordant le côté secondaire de l'échangeur de chaleur (600) au puit froid (820) et au puit chaud (810) ;
dans lequel le dispositif d'équilibrage d'énergie thermique (400) est configuré pour être réglé sélectivement sur un mode de diffusion de chaleur et sur un mode d'admission de chaleur,
dans lequel, lorsque le dispositif d'équilibrage d'énergie thermique (400) est réglé sur le mode de diffusion de chaleur, l'ensemble de soupape côté primaire (500) est configuré pour amener du liquide caloporteur urbain à s'écouler à partir du conduit chaud (120) vers le conduit froid (140) via le côté primaire (610) de l'échangeur de chaleur (600), et l'ensemble de soupape côté secondaire (700) est configuré pour amener du liquide géothermique caloporteur à s'écouler à partir du puit froid (820) vers le puit chaud (810) via le côté secondaire (620) de l'échangeur de chaleur (600) ;
et dans lequel, lorsque le dispositif d'équilibrage d'énergie thermique (400) est réglé sur le mode d'admission de chaleur, l'ensemble de soupape côté primaire (500) est configuré pour amener du liquide caloporteur urbain à s'écouler à partir du conduit froid (140) vers le conduit chaud (120) via le côté primaire (610) de l'échangeur de chaleur (600), et l'ensemble de soupape côté secondaire (700) est configuré pour amener du liquide géothermique caloporteur à s'écouler à partir du puit chaud (810) vers le puit froid (820) via le côté secondaire (620) de l'échangeur de chaleur (600).

2. Dispositif d'équilibrage d'énergie thermique selon la revendication 1, dans lequel les puits chaud et froid (810, 820) sont des puits en boucle fermée, et sont raccordés hydrauliquement via un conduit (830), dans lequel, lorsque le dispositif d'équilibrage d'énergie thermique (400) est réglé sur le mode de diffusion de chaleur, le conduit (830) est configuré pour guider du liquide géothermique caloporteur à partir du puit froid (820) vers le puit chaud (810), et dans lequel, lorsque le dispositif d'équilibrage d'énergie thermique (400) est réglé sur le mode d'admission de chaleur, le conduit (830) est configuré pour guider du liquide géothermique caloporteur à partir du puit chaud (810) vers le puit froid (820).

3. Dispositif d'équilibrage d'énergie thermique selon la revendication 1, dans lequel les puits chaud et froid (810, 820) sont des puits en boucle ouverte, dans lequel les puits chaud et froid (810, 820) sont raccordés hydrauliquement.

4. Dispositif d'équilibrage d'énergie thermique selon la revendication 1, dans lequel les puits chaud et froid (810, 820) sont des puits en boucle ouverte, dans lequel les puits chaud et froid (810, 820) sont dépourvus de raccordement hydraulique.

5. Dispositif d'équilibrage d'énergie thermique selon la revendication 1, dans lequel les puits chaud et froid (810, 820) sont séparés horizontalement et/ou verticalement.

6. Dispositif d'équilibrage d'énergie thermique selon l'une quelconque des revendications précédentes, comprenant en outre une pompe (910, 920), la pompe étant agencée dans une position entre l'ensemble de soupape côté secondaire (700) et l'échangeur de chaleur (600).

7. Dispositif d'équilibrage d'énergie thermique selon l'une quelconque des revendications précédentes, dans lequel le côté primaire (610) de l'échangeur de chaleur (600) comprend une entrée et une sortie, et dans lequel l'ensemble de soupape côté primaire (500) est configuré pour guider un flux du liquide caloporteur urbain à partir de l'entrée vers la sortie lorsque l'ensemble de soupape côté primaire (500) est réglé sur le mode de diffusion de chaleur et lorsque l'ensemble de soupape côté primaire (500) est réglé sur le mode d'admission de chaleur.

8. Dispositif d'équilibrage d'énergie thermique selon l'une quelconque des revendications précédentes, dans lequel le côté secondaire (620) de l'échangeur de chaleur (600) comprend une entrée (621) et une sortie (622), et dans lequel l'ensemble de soupape côté secondaire (700) est configuré pour guider un flux de liquide géothermique caloporteur à partir de l'entrée (621) vers la sortie (622) lorsque l'ensemble de soupape côté secondaire (700) est réglé sur le mode de diffusion de chaleur et lorsque l'ensemble de soupape côté secondaire (700) est réglé sur le mode d'admission de chaleur.

9. Dispositif d'équilibrage d'énergie thermique selon l'une quelconque des revendications précédentes, comprenant en outre un régulateur (940) et un dispositif de détermination de différence de pression (950) adapté pour déterminer une différence de pression locale, Δp_{local}, entre une pression de conduit chaud locale, pₕ, du liquide caloporteur urbain du conduit chaud (120) et une pression de conduit froid locale, p_{c}, du liquide caloporteur urbain du conduit froid (140), Δp_{local} = pₕ - p_{c} ; et
dans lequel le régulateur (940) est configuré pour réguler le flux de liquide caloporteur urbain entre les conduits chaud et froid (120 ; 140) sur la base de la différence de pression locale déterminée.

10. Dispositif d'équilibrage d'énergie thermique selon la revendication 9, comprenant en outre un contrôleur (900) relié à un ou plusieurs parmi le dispositif de détermination de différence de pression (950), le régulateur (940), l'ensemble de soupape côté primaire (500) et l'ensemble de soupape côté secondaire (700).
